# EUROPÄISCHE PATENTANMELDUNG

(11) **EP 4 492 286 A1**
(43) Veröffentlichungstag der Anmeldung: **15.01.2025**
(21) Anmeldenummer: 24187723.2
(22) Anmeldetag: 10.07.2024
(51) Int. Cl.: G06N 3/0455, G06N 3/0464, G05B 19/042, B23Q 15/06, B25J 9/16, G05B 19/418, G06F 30/27

(54) **VERFAHREN ZUR PLANUNG VON WERKZEUGBAHNEN SOWIE CAM-SYSTEM ZUR WERKZEUGBEARBEITUNG**

(30) Priorität: 10.07.2023 DE 102023118215
(71) Anmelder: Fraunhofer-Gesellschaft zur Förderung der angewandten Forschung e.V., 80686 München (DE)
(72) Erfinder: Veneck, Tommy, 52080 Aachen (DE); Ganser, Philipp, 52066 Aachen (DE); Damtew, Lionel, 52064 Aachen (DE)
(74) Vertreter: Naeven, Ralf

(57) **Zusammenfassung**

Zu einem Verfahren zur Planung von Werkzeugbahnen für die computerunterstützte Fertigung mittels eines CAM-Systems, bei dem
a) mittels Bewegung mindestens einer Eingabevorrichtung (5) mindestens eine mögliche Ausgangswerkzeugbahn von einem Benutzer vorgegeben und die Bewegung der Eingabevorrichtung mit Aufnahmemitteln (6) erfasst wird,
b) aus der erfassten Bewegung der mindestens einen Eingabevorrichtung (5) Ausgangswerkzeugbahndaten generiert und einer Datenverarbeitung zur Verfügung gestellt werden und
c) aus den Ausgangswerkzeugbahndaten automatisiert Parametereinstellungen einer Werkstückbearbeitung ermittelt werden,
wird vorgeschlagen, dass
d) für die Datenverarbeitung mindestens ein trainiertes künstliches neuronales Netzwerk (12) eingesetzt wird, wobei zur Ermittlung der Parametereinstellungen die Ausgangswerkzeugbahndaten dem mindestens einen künstlichen neuronalen Netzwerk (12) zugeführt werden.

Des Weiteren wird ein für das Verfahren geeignetes CAM-System vorgeschlagen, welches mindestens ein künstliches neuronales Netzwerk aufweist.

## Beschreibung

Die Erfindung betrifft ein Verfahren für die computergestützte Fertigung (computer aided manufacturing, CAM) gemäß dem Oberbegriff des Anspruchs 1 und ein CAM-System gemäß dem Oberbegriff des Anspruchs 12.

Die Bedienung von CAM-Systemen und insbesondere die darin enthaltene Planung von Werkzeugbahnen ist nach aktuellem Stand der Technik ein wenig intuitiver Prozess. Zur Planung einer Werkzeugbahn ist es nötig, in der CAM-Software eine Vielzahl von Parametereinstellungen einzugeben. Diese Parametereinstellungen sind die Grundlage für die Berechnung der Werkzeugbahn. Es ist bekannt, solche Parametereinstellungen über eine menügeführte Schnittstelle einzugeben, so z.B. für die Parameter Bahnkontur, Werkzeugart, ob es eine zwei- oder dreidimensionale Werkzeugbahn sein soll, Spindeldrehzahl, Schnittgeschwindigkeit, Schnittvorschub oder Vorschub pro Umdrehung. Die Vielzahl der Optionen kann für den Benutzer beim Auffinden der optimalen Kombination eine Herausforderung sein, da oftmals unklar ist, welche Parametereinstellungen getroffen werden müssen, um die gewünschte Werkzeugbahn zu beschreiben. Der Begriff "Parametereinstellung" umfasst im Sinne der hier betroffenen Erfindung alle im Zusammenhang mit den für die Werkzeugbahn erforderlichen Informationen bezüglich eines Werkzeugbahnparameters, zum Beispiel einen Zahlenwert eines Parameters oder die Frage, ob ein bestimmter Parameter überhaupt für die Berechnung der Werkzeugbahn benötigt wird.

Bisher erfordert die effiziente Bedienung von CAM-Systemen daher eine große Menge an Erfahrung. Doch selbst erfahrene Benutzer müssen oft verschiedene Parametereinstellungen ausprobieren, bevor sie diejenigen Einstellungen identifizieren, welche zu der gewünschten Werkzeugbahn führen.

Es ist bekannt (z.B. US 11,556,110 B2 oder US 10,762,699 B2), mit Hilfe einer Software aus der Beschreibung der Zielgeometrie automatisch eine Werkzeugbahn oder die Werkzeugbahn beschreibende Parametereinstellungen zu berechnen, wobei künstliche neuronale Netzwerke eingesetzt werden können. In diesem Fall wird die Werkzeugbahn vollautomatisch ermittelt, so dass eine Werkzeugbahn zunächst ohne Beteiligung eines Benutzers berechnet wird. Erst im Nachhinein kann der Benutzer eingeben, dass er Änderungen möchte (US 11,556,110 B2).

Des Weiteren ist es bekannt, von einem Benutzer eine Eingabevorrichtung entlang einer gewünschten Werkzeugbahn zu bewegen. Die von der Eingabevorrichtung abgefahrene Bahn wird mittels haptisch wirkender Sensoren erfasst und die ermittelte Trajektorie benutzt, um direkt eine Werkzeugbahn zu berechnen (Denkena B, Apitz R, Kowalski P; VR-Unterstützung für die NC-Programmierung fünfachsiger Fräsprozesse. In: Werkstattstechnik online (2006); Volume 96; Number 1/2; p. 47-51; https-//elibrary.vdi-verlag.de/10.37544/1436-4980-2006-1-2-47/vr-unterstuetzung-fuer-die-nc-programmierung-fuenfachsiger-fraesprozesse-jahrgang-96-2006-heft-1-2?page=1). Es können jedoch nicht alle die Werkzeugbahn betreffenden Einstellungen durch eine Handbewegung dargestellt werden. Beispielsweise können kleine Abstände nicht präzise erfasst werden, da Handbewegungen zu ungenau sind. Außerdem sind manche Werkzeugbahnen zu umfangreich und/oder komplex, als dass sie effizient durch eine Handbewegung dargestellt werden könnten. Einige Bearbeitungen erfordern zum Beispiel ein häufiges, zum Beispiel ein zwanzigfaches, Umrunden des Bauteils. Diese Umrundungen durch die Handbewegung darzustellen wäre ermüdend und würde viel Zeit in Anspruch nehmen.

Die dargestellten Lösungen haben somit den Nachteil, dass der Benutzer nicht mehr die gesamten Möglichkeiten des CAM-Systems ausschöpfen kann.

Des Weiteren ist es bekannt (US 2019/391561 A1), mit einem Eingabegerät und Handbewegungen die gewünschte Werkzeugbahn zu skizzieren, ohne jedoch zwangsläufig die gesamte Werkzeugbahn mit den Handbewegungen abfahren zu müssen. Stattdessen genügt es, eine Bewegung durchzuführen, welche die relevanten Merkmale der gewünschten Werkzeugbahn andeutet. Das System errechnet dann aus dieser Eingabe die Parametereinstellungen, welche im Idealfall die gewünschte Werkzeugbahn beschreiben. Für die Berechnung wird die mittels der Handbewegungen erfasste Bahn mit möglichen tatsächlichen Werkzeugbahnen verglichen. Es werden also mehrere Sätze von Parametereinstellungen vom CAM-System ausprobiert. Erfüllt eine der möglichen Werkzeugbahnen eine bestimmte Ähnlichkeitsbedingung mit der Eingabe, so bedeutet dies, dass der zur Werkzeugbahn zugehörige Satz von Parametereinstellungen vom System ausgewählt wird. Das System kann dabei mehr als einen Satz von Parametereinstellungen vorschlagen, von denen der Benutzer einen oder mehrere auswählt, wobei der Benutzer noch Veränderungen an den Parametereinstellungen durchführen kann.

Nachteilig an diesem Stand der Technik ist die Größe des Suchraums der Parametereinstellungen. Gemäß dem in der vorgenannten Druckschrift vorgeschlagenen Algorithmus dürfte die Laufzeit der Berechnung exponentiell mit der Anzahl der Parameter ansteigen. Somit scheint die aus dem Stand der Technik bekannte Methode nur für eine relativ kleine Anzahl an Parametern sinnvoll anwendbar zu sein, wenn die benötigte Rechenleistung nicht zu stark ansteigen soll.

Der Erfindung liegt nun das technische Problem zugrunde, ein Verfahren und eine Vorrichtung der eingangs genannten Art zur Verfügung zu stellen, die mit CAM-Systemen eine intuitive Planung der Werkzeugbahn(en) ermöglicht, wobei auch bei einer hohen Anzahl an Parametern und für die Anwendung sinnvoller Rechenleistung für die Werkzeugsteuerung eine zuverlässige automatisierte Bestimmung der Parametereinstellungen erreicht werden kann.

Bei einem Verfahren der eingangs genannten Art wird das technische Problem mit den kennzeichnenden Merkmalen des Anspruchs 1 und bei einem System der eingangs genannten Art mit den kennzeichnenden Merkmalen des Anspruchs 12 gelöst.

Bevorzugte Ausführungsformen des erfindungsgemäßen Verfahrens ergeben sich aus den abhängigen Ansprüchen.

Die Erfindung bezieht sich auf sämtliche Arten der computergestützten Fertigung, bei denen Werkzeugbahnen geplant werden, insbesondere auf spanabhebende Fertigung, additive Fertigung und Laserschneiden.

Bezüglich eines Verfahrens zur Planung von Werkzeugbahnen für die computerunterstützte Fertigung mittels eines CAM-Systems, bei dem mittels Bewegung einer Eingabevorrichtung mindestens eine mögliche Ausgangswerkzeugbahn von einem Benutzer vorgegeben und die Bewegung der Eingabevorrichtung mit Aufnahmemitteln erfasst wird, aus der erfassten Bewegung der Eingabevorrichtung Ausgangswerkzeugbahndaten generiert und einer Datenverarbeitung zur Verfügung gestellt werden und aus den Ausgangswerkzeugbahndaten automatisiert Parametereinstellungen einer Werkzeugbearbeitung ermittelt werden, wird somit vorgeschlagen, dass für die Datenverarbeitung mindestens ein trainiertes künstliches neuronales Netzwerk eingesetzt wird, wobei zur Ermittlung der Parametereinstellungen die Ausgangswerkzeugbahndaten dem künstlichen neuronalen Netzwerk zugeführt werden.

Da die Rechenleistung, welche hierfür benötigt wird, lediglich linear mit der Anzahl der Parameter ansteigt, ist auch bei einer großen Anzahl an Parametern keine zu hohe Rechenleistung bzw. Rechenzeit erforderlich.

Die Eingabevorrichtung wird bevorzugt von einem Benutzer mit der Hand geführt. Die ermittelten Parametereinstellungen können automatisiert vom CAM-System für die Berechnung einer Werkzeugbahn verwendet werden.

Für die hier betroffene Erfindung können ein oder mehrere künstliche neuronale Netzwerke eingesetzt werden. Soweit in der folgenden Darstellung der Erfindung zur besseren Lesbarkeit von einem künstlichen neuronalen Netzwerk die Rede ist, ist damit gemeint, dass mindestens ein künstliches neuronales Netzwerk vorhanden ist. Bei mehreren künstlichen neuronalen Netzwerken können diese gleich oder auch unterschiedlich ausgestaltet sein und/oder mit gleichen oder denselben Daten oder mit unterschiedlichen Daten trainiert werden. Verschiedene, das heißt nicht zwingend im Aufbau unterschiedliche, künstliche neuronale Netzwerke können z.B. zur Bestimmung unterschiedlicher Parametereinstellungen eingesetzt werden. Eines der künstlichen neuronalen Netzwerke kann darauf trainiert sein, einen oder mehrere Parametereinstellungen der einen Art zu berechnen, z.B. solche, die die Werkzeugorientierung betreffen, während ein anderes künstliches neuronales Netzwerk einen oder mehrere Parametereinstellungen einer anderen Art berechnet, z.B. solche, die die Bearbeitungsstrategie oder Bearbeitungsreihenfolge oder ähnliches betreffen, wobei die beiden künstlichen neuronalen Netzwerke in der Ausgestaltung gleich oder unterschiedlich ausgestaltet sein können.

Das erfindungsgemäße Verfahren kann so ausgeführt werden, dass die Aufnahmemittel mindestens zwei räumlich getrennte Kameraobjektive aufweisen. Hierdurch kann eine räumliche Information über die abgefahrene Ausgangswerkzeugbahn leicht erfasst werden. Die Position und Orientierung der von den Aufnahmemitteln aufgenommenen Eingabevorrichtung kann anhand der von den Aufnahmemitteln erfassten Daten zu diskreten Zeitpunkten berechnet werden. Die Berechnung kann zum Beispiel mit einer Anzahl der Berechnungsvorgänge pro Zeiteinheit von beispielsweise 10 bis 100, vorzugsweise 20 bis 50, weiter vorzugsweise 25 bis 35 pro Sekunde erfolgen.

Es kann vorteilhaft sein, das erfindungsgemäße Verfahren so auszuführen, dass eine stiftförmige Eingabevorrichtung eingesetzt wird. Die Stiftform ist besonders günstig, um einen bestimmten Bereich, zum Beispiel die Spitze der Eingabevorrichtung, als maßgeblich für die Erfassung der abgefahrenen Ausgangswerkzeugbahn zu definieren. Hierdurch kann eine hohe Genauigkeit der Erfassung erreicht werden. Des Weiteren bietet die Stiftform eine gute Handlichkeit für einen Benutzer.

Das erfindungsgemäße Verfahren kann auch so ausgeführt werden, dass mittels an der Eingabevorrichtung angeordneter Eingabemittel Daten und/oder Befehle für die Datenverarbeitung eingegeben werden. Die Eingabemittel können zu drückende Knöpfe, zu bewegende Schiebeschalter oder sonstige Sensoren beliebiger Art sein. Über die Eingabemittel können Signale erzeugt werden, welche als Daten weiterverarbeitet werden können, z.B. als Input für die unmittelbare Bestimmung der Parametereinstellung(en) oder als Daten für das mindestens eine künstliche neuronale Netzwerk, welches zur Berechnung einer oder mehrerer Parametereinstellungen für die Werkzeugbearbeitung dient.

Ein Benutzer kann über die Eingabemittel beispielsweise gewisse Informationen über die Werkzeugbahn eingeben. Zum Beispiel kann hierdurch signalisiert werden, an welchen Stellen der Werkzeugbahn das Werkzeug im Eingriff sein soll, das heißt Kontakt zum Werkstück haben soll. Des Weiteren können beispielhaft durch die Eingabemittel der Start und das Ende einer Eingabe von Daten und/oder des Abfahrens der Ausgangswerkzeugbahn signalisiert werden. Es können alternativ oder zusätzlich zu den an der Eingabevorrichtung angeordneten Eingabemitteln andere Eingabemöglichkeiten, z.B. über eine Tastatur und/oder eine Computermaus, vorgesehen werden.

Das erfindungsgemäße Verfahren kann auch so ausgeführt werden, dass ein virtuelles Werkstückmodell eines Werkstückes in einem Zwischenzustand oder im gewünschten Endzustand zumindest zum Teil mit Anzeigemitteln angezeigt wird und dass die zum Vorgeben der Ausgangswerkzeugbahn durchgeführte Bewegung der Eingabevorrichtung an der Darstellung des virtuellen Werkstückmodells oder an einem Teilbereich des virtuellen Werkstückmodells orientiert wird.

Während der Handhabung der Eingabevorrichtung kann dem Benutzer eine Abbildung des virtuellen Werkstückmodells angezeigt werden. Dies kann z.B. zweidimensional auf einem Bildschirm erfolgen oder mithilfe von Stereoskopie als dreidimensionales Objekt mit einer konkreten Position im Raum. Die Positionen der Eingabevorrichtung können somit auch in Relation zu der Position des virtuellen Werkstückmodells interpretiert werden. Dies erlaubt es dem Benutzer auch auf intuitive Weise Informationen über die räumliche Beziehung des späteren tatsächlichen Werkzeugs zum Werkstück einzugeben.

Das virtuelle Werkstückmodell kann vom CAM-System unter Einbeziehung der von dem mindestens einen künstlichen neuronalen Netzwerk ermittelten Parametereinstellungen zur Berechnung der Werkzeugbahn genutzt werden.

Das erfindungsgemäße Verfahren kann so ausgeführt werden, dass das Training des mindestens einen künstlichen neuronalen Netzwerks folgende Schritte umfasst:
a) Erstellen eines ersten Trainings-Werkstückmodells,
b) Generieren von ersten Trainings-Parametereinstellungen,
c) mittels des CAM-Systems oder mittels einer gesonderten Datenverarbeitungseinheit, jeweils ohne Einsatz des mindestens einen künstlichen neuronalen Netzwerks, Berechnung einer die ersten Trainings-Parametereinstellungen aufweisenden ersten Trainings-Werkzeugbahn auf Basis des ersten Trainings-Werkstückmodells,
d) Nachvollziehen zumindest eines Teils der ersten Trainings-Werkzeugbahn mittels der Eingabevorrichtung, wobei die Bewegung der Eingabevorrichtung mit Aufnahmemitteln erfasst wird, und
e) Berechnung einer von dem mindestens einen künstlichen neuronalen Netzwerk verarbeitbaren Bahn-Darstellung der ersten Trainings-Werkzeugbahn aus den erfassten Bewegungen nach Merkmal d).

Somit kann mittels des CAM-Systems oder einer gesonderten Datenverarbeitung anhand eines Trainings-Werkstückmodells eine Trainings-Werkzeugbahn vorgegeben werden, welche als Vorgabe für Trainingsbewegungen der Eingabevorrichtung dient. Für das Nachvollziehen zumindest eines Teils der ersten Trainings-Werkzeugbahn kann die Eingabevorrichtung die erste Trainings-Werkzeugbahn komplett oder entlang entsprechender Teilbereiche abfahren oder sonstige Bewegungen ausführen, die den Verlauf der ersten Trainings-Werkzeugbahn abbilden.

Auf diese Weise wird ein für das mindestens eine künstliche neuronale Netzwerk erkennbarer Zusammenhang zwischen den generierten Trainings-Parametereinstellungen und der Bewegung der Eingabevorrichtung geschaffen, so dass das trainierte künstliche neuronale Netzwerk aus der Bewegung der Eingabevorrichtung rückwärts die zugehörigen Parametereinstellungen erkennt.

Es ist nicht zwingend erforderlich, dass die gesamte Trainings-Werkzeugbahn abgefahren wird. Es kann genügen, sich auf solche Teile der Trainings-Werkzeugbahn zu beschränken, mit denen Parametereinstellungen in Zusammenhang gebracht werden können.

Zum Training wird bevorzugt eine Vielzahl von Trainings-Werkzeugbahnen erstellt, wobei verschiedene Trainings-Werkstückmodelle eingesetzt werden können oder zumindest einige der Trainings-Werkzeugbahnen mit demselben Trainings-Werkstückmodell aber mit unterschiedlichen Sätzen von Trainings-Parametereinstellungen generiert werden können.

Das erfindungsgemäße Verfahren kann so ausgeführt werden, dass zumindest eine Teilmenge der Trainings-Parametereinstellungen unter Nutzung eines Zufallsprinzips, z.B. unter Einsatz eines Zufallsgenerators, generiert wird. Die Menge der für das Zufallsprinzip zur Verfügung stehenden Parametereinstellungen kann dabei, vorzugsweise automatisiert, beschränkt werden, um einander widersprechende oder ungünstige Zusammenstellungen von Parametereinstellungen zu vermeiden.

Des Weiteren kann das erfindungsgemäße Verfahren so ausgeführt werden, dass die Bahn-Darstellung auf Basis eines Voxelgitters erfolgt.

Eine beispielhafte Alternative zur Nutzung eines Voxelgitters kann die direkte Verwendung der Folge von erfassten Positionen und Orientierungen der Eingabevorrichtung sein. Hierfür könnte mindestens ein künstliches neuronales Netzwerk eingesetzt werden, welches mit sequenziellen Daten arbeiten kann. Eine weitere beispielhafte Alternative kann die Verwendung mehrerer zweidimensionaler Projektionen der erfassten Daten sein. Diese Alternative hätte unter anderem den Vorteil, dass die Bahn-Darstellung weniger Speicherplatz verbraucht und damit einhergehend eine geringere Rechenleistung sowohl während des Trainings als auch während der Anwendung verbraucht. Damit kann der Nachteil, dass ein Teil der Informationen verloren geht, in Kauf genommen werden.

Die Durchführung des erfindungsgemäßen Verfahrens kann unter Einsatz einer Mehrzahl von künstlichen neuronalen Netzwerken erfolgen, wobei vorzugsweise dreidimensionale faltende neuronale Netzwerke (Convolutional Neural Networks) eingesetzt werden

Das künstliche neuronale Netzwerk kann auf derselben Vorrichtung implementiert sein, auf welcher auch das CAM-System realisiert ist. Alternativ kann das neuronale Netzwerk oder können Teile hiervon anderenorts lokalisiert sein, z.B. auch in einer Cloud, wenn eine geeignete Datenübertragung eingerichtet ist.

Ein besonderer Vorteil des erfindungsgemäßen Verfahrens und des erfindungsgemäßen Systems besteht in der intuitiven und schnellen Bedienung des trainierten CAM-Systems. Aufgrund der Erfindung muss eine Vielzahl von Parametereinstellungen nicht vom Benutzer explizit eingegeben werden. Vielmehr erfolgt die Ermittlung der Parametereinstellungen automatisiert über die Erfassung einer Bewegung der Eingabevorrichtung. Die Erfassung der Bewegung kann durch gesonderte Eingaben von Daten, Befehlen oder sonstigen Informationen über weitere Eingabemitteln an der Eingabevorrichtung oder durch gesonderte Eingabemöglichkeiten ergänzt werden. Das bedeutet auch, dass es bei Einsatz eines trainierten Systems nicht zwingend notwendig ist, dass der Benutzer die Bedeutungen der einzelnen Parametereinstellungen kennt. Ein weiterer Vorteil besteht darin, dass diese Lösung eine Vielzahl von Parametereinstellungen berechnen kann, ohne dass dies eine große Menge an Rechenleistung /-zeit erfordert.

Im Folgenden werden beispielhafte Ausführungsformen des erfindungsgemäßen Verfahrens und des erfindungsgemäßen Systems anhand von Figuren dargestellt.

Es zeigt schematisch
Fig. 1: für die Planung einer Werkzeugbahn maßgebliche Komponenten eines Systems zur Werkzeugbearbeitung,
Fig. 2: ein Ablaufschema für ein Verfahren zur Planung einer Werkzeugbahn.

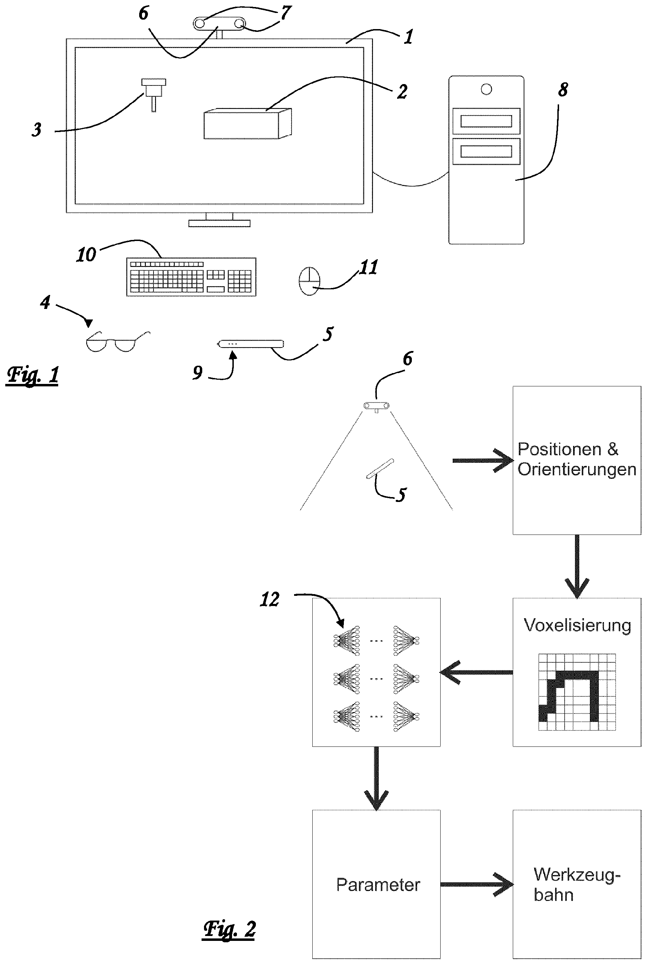

Fig. 1 zeigt symbolisch ein Anzeigemittel 1 in Form eines Bildschirmes, mit dem ein virtuelles Werkstückmodell 2, das beispielsweise mittels CAD erstellt wurde und welches zum Beispiel dem Werkstück im gewünschten Endzustand entspricht, dargestellt ist.

Das virtuelle Werkstückmodell 2 kann alternativ auch das Werkstück in einem Zwischenzustand darstellen. So kann die CAM-Software eingesetzt werden, um eine Folge mehrerer Bearbeitungsoperationen zu planen. Das Werkstückmodell für eine bestimmte Bearbeitungsoperation würde dem gewünschten Zwischenzustand des Werkstücks nach dieser Bearbeitungsoperation entsprechen.

Das virtuelle Werkstückmodell 2 kann auch lediglich einen Teil des Werkstückes im gewünschten Endzustand oder in einem Zwischenzustand darstellen. Der dargestellte Teil des Werkstückes kann zum Beispiel mehrere zu bearbeitende Flächen oder eine einzelne Fläche sein. Wird z.B. eine Fläche durch mehrere aufeinanderfolgende Bearbeitungsoperationen bearbeitet, so gibt es bspw. für jede Bearbeitungsoperation einen Zwischenzustand dieser Fläche. In diesem Fall kann es sinnvoll sein, mit dem virtuellen Werkstückmodell 2 nur den Zwischenzustand dieser Fläche anzuzeigen und nicht das gesamte Werkstück.

Des Weiteren ist eine Darstellung eines Bearbeitungswerkzeugs 3 gezeigt. Die Funktion dieser für die Erfindung optionalen Darstellung wird weiter unten erläutert.

Mit dem Anzeigemittel 1 in Form eines Bildschirms ist typischerweise eine zweidimensionale Darstellung gegeben. Es können alternativ auch Mittel zur dreidimensionalen Anzeige des virtuellen Werkstückmodells 2 und/oder des Bearbeitungswerkzeuges 3 vorgesehen werden. Für eine dreidimensionale Darstellung des virtuellen Werkstückmodells 2 können Hilfsmittel, wie zum Beispiel eine 3-D-Brille 4 für einen hier nicht dargestellten Benutzer vorgesehen werden. Eine dreidimensionale Darstellung wäre vorteilhaft für das intuitive Vorgehen bei der Planung einer Werkzeugbahn.

Mit Bewegung einer Eingabevorrichtung 5 kann der Benutzer unter Berücksichtigung des dargestellten virtuellen Werkstückmodells 2 eine mögliche Ausgangswerkzeugbahn vorgeben. Hierfür kann er z.B. Konturen des virtuellen Werkstückmodells 2 oder Teilkonturen hiervon abfahren. Die Bewegung der Eingabevorrichtung 5 wird mit Aufnahmemitteln 6, hier in Form einer Kamera mit zwei räumlich getrennten Aufnahmeobjektiven 7, erfasst. Aus der erfassten Bewegung werden Daten erzeugt, welche die Ausgangswerkzeugbahn definieren. Die Datenerzeugung erfolgt in den Aufnahmemitteln 6 oder in einer Datenverarbeitungsanlage 8.

Die Darstellung des Bearbeitungswerkzeuges 3 kann derart sein, dass es sich in Echtzeit zusammen mit der Eingabevorrichtung 5, welche weiter unten näher dargestellt wird, bewegt und deren Bewegung anzeigt. So erhält ein Benutzer eine Rückmeldung darüber, ob die Eingabevorrichtung 5 korrekt erfasst wird und ob die erfasste Position und/oder die räumliche Ausrichtung mit der beabsichtigten Position und/oder räumlichen Ausrichtung des Bearbeitungswerkzeuges 3 übereinstimmt. Die Darstellung des Bearbeitungswerkzeuges 3 ist optional.

Die Datenverarbeitungsanlage 8 kann auch zur Steuerung der Anzeigemittel 1 dienen. Die Datenverarbeitungslage 8 kann als Einheit zur Erzeugung des Werkzeugmodells, z.B. als CAD-Einheit (Computer Aided Design) und/oder für das CAM eingesetzt werden.

Der Benutzer hat die Möglichkeit, vor, während oder nach Bewegung der Eingabevorrichtung 5 Befehle und/oder Daten einzugeben, zum Beispiel über an der Eingabevorrichtung 5 angeordnete Eingabemittel 9 und/oder über eine Tastatur 10 und/oder eine Computermaus 11 und/oder über sonstige, hier nicht dargestellte Möglichkeiten. Die vom Benutzer generierten Befehle und/oder Daten und/oder sonstige Informationen können sich zum Beispiel auf eine oder mehrere Parametereinstellungen für die Werkstückbearbeitung beziehen und/oder den Beginn und/oder das Ende und/oder eine Unterbrechung der Bewegungen zur Eingabe der Ausgangswerkzeugbahn signalisieren.

Die Datenverarbeitungsanlage 8 kann mindestens ein neuronales Netzwerk 12 (in Fig. 2 symbolisch dargestellt) aufweisen oder mit diesem drahtgebunden und/oder drahtlos verbunden sein.

Das Schema der Fig. 2 stellt eine beispielhafte Ausführungsform unter Einsatz einer Mehrzahl bereits trainierter künstlicher neuronaler Netzwerke dar. Demnach werden mit den Aufnahmemitteln 6 Positionen und Orientierungen der Eingabevorrichtungen 5 erfasst. Aus der Abfolge der Positionen wird, bevorzugt von der Datenverarbeitungsanlage 8, eine Ausgangswerkzeugbahn im dreidimensionalen Raum ermittelt, die durch eine Voxelisierung mit Volumenelementen (Voxeln), also in einem Voxelgitter, dargestellt werden kann.

Die digitalisierte Ausgangswerkzeugbahn wird den künstlichen neuronalen Netzwerken 12 zugeführt. Die künstlichen neuronalen Netzwerke 12 kennen zudem das Werkstückmodell 2, welches das Werkstück oder einen Teil hiervon in seinem gewünschten Endzustand oder einem Zwischenzustand wiedergibt. Das Werkstückmodell 2 kann den künstlichen neuronalen Netzwerken 12 beispielhaft ebenfalls als voxelbasierte Darstellung zugeführt werden.

Außerdem können den künstlichen neuronalen Netzwerken 12 weitere, bereits zuvor festgelegte und in der Datenverarbeitungsanlage gespeicherte Randbedingungen und/oder Daten sowie vom Benutzer vor, während oder nach der Erzeugung der Ausgangswerkzeugbahn eingegebene Daten und/oder Befehle zugeführt werden. Aus den Daten der Ausgangswerkzeugbahn sowie gegebenenfalls aus den zusätzlich vom Benutzer eingegebenen Daten und/oder Befehlen ermitteln die künstlichen neuronalen Netzwerke 12 Parametereinstellungen für die Werkzeugbearbeitung, woraus sich schließlich eine mögliche Werkzeugbahn ergibt. Für die Berechnung der Parametereinstellungen können erforderlichenfalls auch die Daten des Werkstückmodells 2 herangezogen werden.

Im Folgenden werden beispielhafte Maßnahmen zum Training der künstlichen Intelligenz dargestellt, wobei hier beispielhaft eine Mehrzahl von künstlichen neuronalen Netzwerken 12 unter Verarbeitung von Daten in Voxel-Form eingesetzt wird. Andere Trainingsarten sind ebenfalls möglich.

Zur Erzeugung der Trainingsdaten wird in einem ersten Schritt für ein Trainings-Werkstückmodell eine Vielzahl von beispielhaften Trainings-Parametereinstellungen nach einem Zufallsprinzip generiert. Aus diesen zufälligen Trainings-Parametereinstellungen werden jeweils zugehörige Trainings-Werkzeugbahnen, bevorzugt auf klassischem Wege durch das CAM-System, berechnet. Die zufällig generierten Trainings-Parametereinstellungen können eingeschränkt werden, um eine Redundanz von Lösungen zu verhindern. So ist es in einem CAM-System prinzipiell möglich, dass zwei unterschiedliche Parametereinstellungen die gleiche Bahn beschreiben, z.B. kann ein und dieselbe Orientierung durch den Wert -90° oder den Wert 270° beschrieben werden. Dies kann beim Training hinderlich sein kann, da das künstliche neuronale Netzwerk eine eindeutige Lösung berechnen soll. Dazu wird der Raum an Trainings-Parametereinstellungen so eingeschränkt, dass es zu jeder Trainings-Werkzeugbahn nur eine Lösung gibt.

Die Generierung der Trainings-Parametereinstellungen erfolgt bevorzugt für eine Vielzahl von Trainings-Werkstückmodellen, wobei dasselbe Trainings-Werkstückmodell auch für unterschiedliche Trainings-Parametereinstellungen verwendet werden kann.

Damit ist eine Vielzahl von Trainings-Werkzeugbahnen mit zugehörigen Trainings-Parametereinstellungen erstellt. Es ist sichergestellt, dass es zu jeder Trainings-Werkzeugbahn eine Lösung, d.h. einen passenden Satz von Trainings-Parametereinstellungen gibt.

Die Eingabevorrichtung 5 wird in einem weiteren Schritt verwendet, um die Trainings-Werkzeugbahnen nachzuvollziehen, ohne dass hierfür zwangsläufig jeweils die gesamte Trainings-Werkzeugbahn abgefahren werden muss. Es kann genügen, für die jeweilige Trainings-Werkzeugbahn relevante Bereiche abzufahren. Die dabei vollzogenen Bewegungen der Eingabevorrichtung 5 werden erfasst, um zum einen für jede Trainings-Werkzeugbahn die entsprechende Voxel-Darstellung zu berechnen, die die künstlichen neuronalen Netzwerke 12 verarbeiten können. Diese Voxel-Darstellung der Trainingswerkzeugbahn ist nun mit den Trainings-Parametereinstellungen verknüpft. Hiermit sind Trainingsdaten gegeben, die zum Training den künstlichen neuronalen Netzwerke 12 zugeführt werden. Die Trainingsdaten können zudem voxelisierte Trainings-Werkstückmodelle und/oder sonstige Informationen, welche z.B. mittels der Eingabevorrichtung 5 beim Nachvollziehen der Trainings-Werkzeugbahnen eingegeben werden, umfassen.

Anhand der Trainingsdaten wird das eigentliche Training durchgeführt, bei dem die künstlichen neuronalen Netzwerke 12 in einer Vielzahl von Durchgängen auf Grundlage der voxelisierten Trainings-Werkzeugbahnen CAM-Parametereigenschaften berechnen, die über die Durchgänge hinweg den tatsächlichen Trainings-Parametereigenschaften, das sind die zu Beginn des Prozesses zufällig generierten Trainings-Parametereinstellungen, möglichst nahe kommen sollen.

Beispielhaft können die künstlichen neuronalen Netzwerke 12 (hier 3D-CNNs) mittels Rückpropagierung (Backpropagation) trainiert werden. Dazu kann für jedes künstliche neuronale Netzwerk 12 eine differenzierbare Funktion definiert werden, welche den Fehler des künstlichen neuronalen Netzwerks 12 misst. Die Funktion gibt an, wie sehr sich die vom künstlichen neuronalen Netzwerk 12 berechneten CAM-Parametereinstellungen von den tatsächlichen Trainings-Parametereinstellungen in den Trainingsdaten unterscheiden.

Für sogenannte kategorische Parametereinstellungen, also solche Parametereinstellungen, für die es eine kleine Anzahl diskreter Optionen (Kategorien oder Klassen) gibt, kann das Fehlermaß der Kategorischen Kreuzentropie (Categorical Cross-Entropy) verwendet werden. Für numerische Parametereinstellungen, welche innerhalb eines Wertebereichs alle Werte annehmen können, kann das Fehlermaß der mittleren quadratischen Abweichung (mean squared error) verwendet werden. Es kann versucht werden, das Fehlermaß zu minimieren, indem die künstlichen neuronalen Netze 12 mittels Rückpropagierung angepasst werden.

Zur Vermeidung möglicher Verwechslungen wird im Folgenden für die Parametereinstellungen der Werkzeugbahnen zur Klarstellung auch der Begriff CAM-Parametereinstellungen verwendet.

Für jede CAM-Parametereinstellung können mehrere künstliche neuronale Netzwerke 12 mit unterschiedlichen Hyperparametern trainiert werden. Der Begriff "Hyperparameter" betrifft nicht die Bearbeitungsparameter für die Werkzeugbearbeitung, sondern beschreibt die verschiedenen Ausgestaltungen der künstlichen neuronalen Netzwerke 12, zum Beispiel die Größe des künstlichen neuronalen Netzwerks 12, d.h. die Anzahl der Schichten, die Aktivierungsfunktionen im künstlichen neuronalen Netzwerk 12 oder die Lernrate.

Ein Teil der Trainingsdaten muss nicht direkt für das Training verwendet werden, sondern dient dazu, den Erfolg des Trainings zu validieren und so für jede CAM-Parametereinstellung zu entscheiden, welcher der verschiedene Hyperparameter aufweisenden künstlichen neuronalen Netzwerke 12 gewählt wird.

Für einige CAM-Parametereinstellungen ist es vorteilhaft, nicht direkt den Wert der jeweiligen CAM-Parametereinstellung zu verwenden, sondern den Wert erst in eine andere alternative Darstellung umzurechnen. Die künstlichen neuronalen Netzwerke 12 werden darauf trainiert, diese alternative Darstellung der Parametereinstellung zu berechnen. Es ist dann möglich, aus dieser alternativen Darstellung auf die CAM-Parametereinstellung zurückzurechnen. Dies kann insbesondere im Training numerische Vorteile für das Fehlermaß bieten, welche das Training verbessern.

Als Beispiel für diese Vorgehensweise wird eine CAM-Parametereinstellung betrachtet, die eine Orientierung beschreibt und Werte im Intervall [-180, 180) einnehmen kann. Dieser Wert beschreibt den Winkel der Orientierung relativ zu einer Koordinatenachse im Gradmaß. Zum Beispiel beschreiben die Werte -180 und 179 faktisch sehr ähnliche Orientierungen, da der Unterschied nur 1° beträgt. Die numerische Differenz hingegen ist mit 359 sehr groß. Dies ist für das Training hinderlich. Aufgrund dessen kann beispielhaft das zuständige künstliche neuronale Netzwerke 12 trainiert werden, den Kosinus und den Sinus dieser CAM-Parametereinstellung zu berechnen. Jetzt besteht ein Zusammenhang zwischen der numerischen Differenz zweier Werte und der Ähnlichkeit der Orientierung: Für den Wert -180 gilt: cos(-180)=-1 und sin(-180)=0. Für den Wert 179 gilt: cos(179) ≈ -0,9998 und sin(179) ≈ 0,02. Die Differenz ist also sehr gering für diese sehr ähnlichen Orientierungen. Aus den berechneten Werten kann dann die zugehörige CAM-Parametereinstellung durch die Funktion arctan2 berechnet werden. Der arctan2 ist eine für diesen Anwendungsfall optimierte Variante des Arkustangens, da er nicht auf den Bereich (-90°, 90°) beschränkt ist.

Im Allgemeinen, werden die CAM-Parametereinstellungen so umgerechnet, dass das Fehlermaß kleiner ist, je "ähnlicher" die zugehörigen Trainings-Werkzeugbahnen sind.

Zur Erläuterung der Wirkung des Trainings wird im Folgenden ein konkretes Beispiel herangezogen: Die künstlichen neuronalen Netzwerke 12 könnten auch vor Abschluss des Trainings im untrainierten Zustand oder auch im teilweise trainierten Zustand bereits CAM-Parametereinstellungen berechnen. Es ist zu erwarten, dass die so berechneten CAM-Parametereinstellungen aufgrund des untrainierten oder nicht hinreichend trainierten Zustands stark von den tatsächlichen CAM-Parametereinstellungen abweichen. Mit dem Training ist angestrebt, dass die berechneten Parametereinstellungen den tatsächlichen Parametereinstellungen möglichst nahe kommen. Als Fehlermaß wird beispielhaft die bereits erwähnte mittlere quadratische Abweichung (mean-sqaured error MSE) herangezogen. Soll beispielsweise eines der künstlichen neuronalen Netzwerke 12 für einen CAM-Parameter trainieren, welcher eine Orientierung [-180°, 180°) beschreibt, kann - wie bereits beschrieben - mit einer alternativen Darstellung trainiert werden, nämlich mit dem Sinus und Kosinus des Parameters. Ist beispielsweise der tatsächliche Parameterwert 60°, so entspricht dies: sin=0,866 und cos=0,5. Wenn das künstliche neuronale Netzwerk 12 nun die Werte sin=1 und cos=0 berechnet, was einem berechneten CAM-Parameterwert von 90° entsprechen würde, so liegt ein Fehler vor, dessen mittlere quadratische Abweichung (MSE) ((1 - 0,866)² + (0 - 0,5)²) / 2 = 0,134 beträgt.

Damit das Fehlermaß eine höhere Aussagekraft hat, wird es nicht nur für ein einziges Beispiel aus dem Trainingsdatensatz berechnet, sondern es wird der Durchschnitt des Fehlers über viele Beispiele verwendet. Ziel des Trainings ist es, diesen durchschnittlichen Fehler zu minimieren. Dazu wird das künstliche neuronale Netzwerk 12, z.B. nach dem Verfahren der Rückpropagation, angepasst. Das angepasste künstliche neuronale Netzwerk 12 wird nun andere Werte für sin und cos berechnen, woraufhin der Fehler anders, erwartungsgemäß niedriger als vorher sein wird. Mit einer häufigen Wiederholung und der Erwartung, dass die meisten Anpassungen eine Reduktion des Fehlers bringen, kann das Fehlermaß z.B. einen bestimmten Grenzwert unterschreiten oder sich über mehrere Wiederholungen nicht mehr signifikant ändern, so dass das Training beendet und das künstliche neuronale Netzwerk 12 verwendet werden kann.

### Bezugszeichenliste

- 1: Anzeigemittel
- 2: virtuelles Werkstückmodell
- 3: Bearbeitungswerkzeug
- 4: 3-D-Brille
- 5: Eingabevorrichtung
- 6: Aufnahmemittel
- 7: Kamera objektiv
- 8: Datenverarbeitungsanlage
- 9: Eingabemittel
- 10: Tastatur
- 11: Computermaus
- 12: Künstliches neuronales Netzwerk

## Patentansprüche

1. Verfahren zur Planung von Werkzeugbahnen für die computerunterstützte Fertigung mittels eines CAM-Systems, bei dem
a) mittels Bewegung mindestens einer Eingabevorrichtung (5) mindestens eine mögliche Ausgangswerkzeugbahn von einem Benutzer vorgegeben und die Bewegung der Eingabevorrichtung mit Aufnahmemitteln (6) erfasst wird,
b) aus der erfassten Bewegung der mindestens einen Eingabevorrichtung (5) Ausgangswerkzeugbahndaten generiert und einer Datenverarbeitung zur Verfügung gestellt werden und
c) aus den Ausgangswerkzeugbahndaten automatisiert Parametereinstellungen einer Werkstückbearbeitung ermittelt werden,
**dadurch gekennzeichnet, dass**
d) für die Datenverarbeitung mindestens ein trainiertes künstliches neuronales Netzwerk (12) eingesetzt wird, wobei zur Ermittlung der Parametereinstellungen die Ausgangswerkzeugbahndaten dem mindestens einen künstlichen neuronalen Netzwerk (12) zugeführt werden.

2. Verfahren nach Anspruch 1, **dadurch gekennzeichnet, dass** als Teil der Aufnahmemittel mindestens zwei räumlich getrennte Kameraobjektive (7) eingesetzt werden.

3. Verfahren nach Anspruch 1 oder 2, **dadurch gekennzeichnet, dass** eine stiftförmige Eingabevorrichtung (5) eingesetzt wird.

4. Verfahren nach einem der vorhergehenden Ansprüche, **dadurch gekennzeichnet, dass** mittels an der mindestens einen Eingabevorrichtung (5) angeordneten Eingabemitteln (9) Daten und/oder Befehle für die Datenverarbeitung eingegeben werden.

5. Verfahren nach einem der vorhergehenden Ansprüche, **dadurch gekennzeichnet, dass** ein virtuelles Werkstückmodell (2) eines Werkstückes in einem Zwischenzustand oder im gewünschten Endzustand zumindest zum Teil mit Anzeigemitteln (1) angezeigt wird und die zum Vorgeben der Ausgangswerkzeugbahn durchgeführte Bewegung der Eingabevorrichtung (5) an der Darstellung des virtuellen Werkstückmodells (2) oder an einem Teilbereich des virtuellen Werkstückmodells (2) orientiert wird.

6. Verfahren nach einem der vorhergehenden Ansprüche, **dadurch gekennzeichnet, dass** die Anzeigemittel (1) eine stereoskopische Darstellung bewirken.

7. Verfahren nach einem der vorhergehenden Ansprüche, **dadurch gekennzeichnet, dass** das Trainieren des mindestens einen künstlichen neuronalen Netzwerks (12) folgende Schritte umfasst:
a) Erstellen eines ersten Trainings-Werkstückmodells,
b) Generieren von ersten Trainings-Parametereinstellungen,
c) mittels des CAM-Systems oder mittels einer gesonderten Datenverarbeitungseinheit, jeweils ohne Einsatz des mindestens einen künstlichen neuronalen Netzwerks (12), Berechnung einer die ersten Trainings-Parametereinstellungen aufweisenden ersten Trainings-Werkzeugbahn auf Basis des ersten Trainings-Werkstückmodells,
d) Nachvollziehen zumindest eines Teils der ersten Trainings-Werkzeugbahn mittels Bewegung der Eingabevorrichtung (5), wobei die Bewegung der Eingabevorrichtung (5) mit Aufnahmemitteln (6) erfasst wird, und
e) Berechnung einer von dem mindestens einen künstlichen neuronalen Netzwerk (12) verarbeitbaren Bahn-Darstellung der ersten Trainings-Werkzeugbahn aus den erfassten Bewegungen nach Merkmal d).

8. Verfahren nach Anspruch 7, **dadurch gekennzeichnet, dass** die Schritte a) bis e) des Anspruchs 7 mindestens einmal zur Berechnung mindestens einer weiteren Bahn-Darstellung wiederholt werden, wobei für jede Wiederholung ein geändertes Trainings-Werkstückmodell und/oder geänderte Trainings-Parametereinstellungen eingesetzt werden.

9. Verfahren nach Anspruch 7 oder 8, **dadurch gekennzeichnet, dass** zumindest eine Teilmenge der Trainings-Parametereinstellungen unter Nutzung eines Zufallsprinzips generiert wird.

10. Verfahren nach einem der Ansprüche 7 bis 9, **dadurch gekennzeichnet, dass** die Bahn-Darstellung auf Basis eines Voxelgitters erfolgt.

11. Verfahren nach einem der vorhergehenden Ansprüche, **dadurch gekennzeichnet, dass** das Verfahren unter Einsatz einer Mehrzahl von künstlichen neuronalen Netzwerken durchgeführt wird, wobei vorzugsweise dreidimensionale faltende neuronale Netzwerke (Convolutional Neural Networks) eingesetzt werden.

12. CAM-System zur Werkzeugbearbeitung, umfassend
a) mindestens eine von einem Benutzer zum Vorgeben einer Ausgangswerkzeugbahn geeignete Eingabevorrichtung (5),
b) zur Aufnahme der Bewegung der mindestens einen Eingabevorrichtung (5) geeignete Aufnahmemittel (6), wobei auf Basis der Aufnahme Ausgangswerkzeugbahndaten generiert werden und
c) Datenverarbeitungsmittel (8) zur automatisierten Ermittlung von Parametereinstellungen der Werkstückbearbeitung aus den Ausgangswerkzeugbahndaten,
**dadurch gekennzeichnet, dass**
d) die Datenverarbeitungsmittel (8) mindestens ein künstliches neuronales Netzwerk aufweisen.

13. CAM-System nach Anspruch 12, **dadurch gekennzeichnet, dass** die Aufnahmemittel (6) mindestens zwei räumlich getrennte Kameraobjektive (7) aufweisen sowie vorzugsweise Anzeigemitteln (1) zur Anzeige eines virtuellen Werkstückmodells (2) eines Werkstückes in einem Zwischenzustand oder im gewünschten Endzustand oder zumindest eines Teils hiervon, wobei weiter vorzugsweise die Anzeigemittel (1) zur stereoskopischen Darstellung eingerichtet sind.

14. CAM-System nach Anspruch 12 oder 13, **dadurch gekennzeichnet, dass** die Eingabevorrichtung (5) oder mindestens eine der Eingabevorrichtungen (5) Eingabemittel (9) zur Eingabe von Daten und/oder Befehlen für die Datenverarbeitung aufweist und vorzugsweise die mindestens eine Eingabevorrichtung (5) oder mindestens eine der Eingabevorrichtungen (5) stiftförmig ist.

15. CAM-System nach einem der Ansprüche 12 bis 14, **dadurch gekennzeichnet, dass** das CAM-System eingerichtet ist, das Verfahren nach einem der Ansprüche 1 bis 11 auszuführen.
